# EUROPÄISCHE PATENTANMELDUNG

(11) **EP 2 881 553 A1**
(43) Veröffentlichungstag der Anmeldung: **10.06.2015**
(21) Anmeldenummer: 13196196.3
(22) Anmeldetag: 09.12.2013
(51) Int. Cl.: F01D 25/28, F02C 7/20, F02C 7/22

(54) **Halterung für wenigstens teilweise ringförmige Gaszuführleitungen einer stationären Gasturbine**

(71) Anmelder: Siemens Aktiengesellschaft, 80333 München (DE)
(72) Erfinder: Reusch, Ralf, 45481 Mülheim an der Ruhr (DE); Fei, Ruiqian, 45145 Essen (DE); Hesse, Werner, 45721 Haltern am See (DE); Murrenhoff, Daniel, 44789 Bochum (DE)

(57) **Zusammenfassung**

Die Erfindung betrifft eine stationäre Gasturbine (1) mit mindestens einer wenigstens teilweise ringförmigen Gaszuführleitung (2), die durch eine Halterung (10) abgestützt ist, wobei die Gasturbine (1) im Inneren eine Hauptströmungsrichtung (HSR) der Arbeitsfluide aufweist, und wobei die Halterung (10) wenigstens eine gegen den Boden abgestützte Bodenhalterung (11) und eine auf dem Gehäuse (3) der Gasturbine (1), auf der der Bodenhalterung (11) gegenüber liegenden Seite angebrachte Stirnhalterung (12) umfasst, und wobei sowohl die Bodenhalterung (11) als auch die Stirnhalterung (12) die Gaszuführleitung (2) sowohl gegen eine Bewegung in die Hauptströmungsrichtung (HSR) als auch senkrecht dazu abstützen.

## Beschreibung

Die vorliegende Erfindung betrifft eine stationäre Gasturbine mit mindestens einer wenigstens teilweise ringförmigen Gaszuführleitung, die durch eine Halterung abgestützt und gehaltert ist.

Bisher wurden die typischerweise ringförmigen Gaszuführleitungen von stationären Gasturbinen über geeignete Halterungen an dem Gehäuse der Gasturbine befestigt. Aufgrund der Anforderungen an die Stabilität der Befestigung sind meist größere Halterungskomponenten an der Außenseite des Gehäuses der Gasturbine angebracht. Da jedoch die Bauweise von Gasturbine zunehmend komplexer wird, werden mitunter weitere wichtige Funktionsbauteile an der Außenseite des Gehäuses befestigt, bzw. ist das Gehäuse derart geformt, dass eine problemlose Halterung der Gaszuführleitung nicht mehr möglich ist. Hierbei sind insbesondere die Leitschaufelverstelleinrichtungen zu nennen, die bei neueren Gasturbinen einen Großteil der Außenfläche des Gehäuses belegen. Solche Funktionsbauteile verhindern in Folge eine herkömmliche Befestigung der Gaszuführleitung an der Außenseite des Gehäuses der Gasturbine.

Die bisherigen Halterungen erweisen sich jedoch nicht nur aufgrund des möglicherweise verminderten Platzes zur Anbringung an der Außenseite des Gehäuses der Gasturbine als nachteilig, sondern auch hinsichtlich der Stabilitätsanforderungen, die etwa bei Eintritt eines Erdbebens zu erfüllen sind. Die gesetzlichen Sicherheitsanforderungen verlangen nämlich, dass die Gaszuführleitungen auch im Falle eines Erdbebens sicher und ohne Schadensnahme an der Gasturbine gehaltert werden können. Insbesondere feste, mit der Außenseite des Gehäuses verbundene Halterungen übertragen aber mitunter im Falle eines Erdbebens mechanische Schwingungen derart effizient auf die Gaszuführleitung, dass diese beschädigt werden können bzw. diese sogar brechen können. In einem solchen signifikanten Schadensfall ist jedoch mit einer Brandentwicklung zu rechnen, die es zu vermeiden gilt.

Aufgrund der oben dargestellten Nachteile aus dem Stand der Technik ergibt sich das technische Erfordernis, eine verbesserte Halterung für eine wenigstens teilweise ringförmige Gaszuführleitung vorzuschlagen, um diese sowohl effizient hinsichtlich der Platznutzung als auch sicher auf dem Gehäuse der stationären Gasturbine anzubringen.

Die Anbringung der Halterung auf dem Gehäuse der Gasturbine betrifft hierbei, soweit Nichts anderes gesagt ist, in erster Linie die Außenseite der Gasturbine.

Die der Erfindung zugrundeliegende Aufgabe wird gelöst durch eine stationäre Gasturbine gemäß Anspruch 1.

Insbesondere werden die der Erfindung zugrundeliegenden Aufgaben gelöst durch eine stationäre Gasturbine mit mindestens einer wenigstens teilweise ringförmigen Gaszuführleitung, die durch eine Halterung abgestützt ist, wobei die Gasturbine im Inneren eine Hauptströmungsrichtung der Arbeitsfluide aufweist, und wobei die Halterung wenigstens eine gegen den Boden abgestützte Bodenhalterung und eine auf dem Gehäuse der Gasturbine, auf der der Bodenhalterung gegenüberliegenden Seite angebrachte Stirnhalterung umfasst, und wobei sowohl die Bodenhalterung als auch die Stirnhalterung die mindestens eine Gaszuführleitung sowohl gegen eine Bewegung in die Hauptströmungsrichtung als auch senkrecht dazu, abstützen.

An dieser Stelle sei darauf hingewiesen, dass die Hauptströmungsrichtung der Arbeitsfluide der mittleren Hauptströmungsrichtung der Arbeitsfluide entspricht und im Normalfall mit der Längsachse der Gasturbine übereinstimmt. Insbesondere entspricht die Hauptströmungsrichtung der Längserstreckungsachse des Gasturbinenläufers. Zudem soll darauf hingewiesen sein, dass eine Abstützung gegen eine Bewegung in die Hauptströmungsrichtung auch eine Abstützung in entgegen gesetzter Richtung umfassen soll.

Weiter sei darauf hingewiesen, dass eine wenigstens teilweise ringförmige Gaszuführleitung wenigstens einen Abschnitt aufweisen soll, welcher im Wesentlichen ringförmig ausgebildet ist. Eine Ringförmigkeit ist jedoch bereits auch schon dann gegeben, wenn eine solche durch einen Polygonenzug auch nur angenähert beschrieben werden kann. Insofern ist es also im erfindungsgemäßen Sinne nicht unbedingt erforderlich, dass die Gaszuführleitung eine methematisch exakte Ringform bzw. derartige Abschnitte beschreibt. Vielmehr ist es ausreichend, wenn die betreffende Gesamtabschnittsform durch einen Ringabschnitt ersetzt werden könnte.

Das erfindungsgemäße Halterungskonzept schlägt vor, die Halterung der wenigstens teilweise ringförmigen Gaszuführleitung auf wenigstens zwei Seiten des Gehäuses der Gasturbine zu gewährleisten, wobei die beiden Seiten sich im Wesentlichen gegenüberliegen. Aufgrund der geometrischen Anordnung von Bodenhalterung und Stirnhalterung kann zum einen gewährleistet werden, dass das Eigengewicht der Gaszuführleitung effizient abgestützt wird, wobei gleichzeitig auch eine Abstützung gegen eine Bewegung in Hauptströmungsrichtung effizient erreicht werden kann. Gleichzeitig können mechanische Einwirkungen, etwa in Form von Schwingungen, verbessert gedämpft werden, indem nämlich die Halterungsbereiche (Bodenhalterung und Stirnhalterung) sich im Wesentlichen gegenüberliegen und damit die eingekoppelte Schwingungsamplituden effektiv vermindern können. Weiterhin ist die Bodenhalterung gegenüber dem Boden abgestützt, so dass hierdurch nicht nur eine effiziente Kraftabstützung sondern auch eine vorteilhafte Schwingungsdämpfung erreicht werden kann. Da zudem die Abstützung nicht nur zum Boden hin erfolgt, also etwa senkrecht zur Hauptströmungsrichtung, sondern auch gegen eine Bewegung in die Hauptströmungsrichtung, bzw. in die entgegengesetzte Richtung der Hauptströmungsrichtung, kann eine gute Dämpfung von in das System von Gasturbine und Gaszuführleitung eingekoppelten Schwingungsamplituden erreicht werden.

Entsprechend einer bevorzugten Ausführungsform der Erfindung ist die Stirnhalterung auf dem Scheitelpunkt des Gehäuses bei regulärem Betrieb der Gasturbine vorgesehen. Ebenso ist es aber auch möglich, die Stirnhalterung in davon abweichender Position, also seitlich auf der Gehäusefläche in Richtung zur Bodenhalterung verschoben, anzubringen. Wesentlich ist jedoch hierbei, dass die Stirnhalterung in Querschnittsicht durch das Gehäuse der Gasturbine sich in Bezug auf dem Gehäuseoberteil (oberer Gehäuseabschnitt) angebracht ist, wohingegen die Bodenhalterung dem Gehäuseunterteil zugeordnet ist, also dem Boden zugewandt ist. Eine entsprechende Zuordnung erfordert hierbei jedoch nicht eine Anbringung an dem Gehäuse der Gasturbine. Ganz besonders bevorzugt erfolgt keine Anbringung der Bodenhalterung an dem Gehäuse der Gasturbine, um so eine mechanische Entkopplung zwischen Halterung und Gasturbine zu erreichen.

Entsprechend einer weiteren besonders bevorzugten Ausführungsform der Erfindung ist vorgesehen, dass die Bodenhalterung nicht mit dem Gehäuse der Gasturbine verbunden ist und insbesondere in einem Fundament der Gasturbine verankert ist. Dadurch kann zum einen, wie oben ausgeführt, eine Entkopplung zwischen Bodenhalterung und Gasturbine erreicht werden, andererseits kann auch eine effiziente Abstützung des Gewichts der Gaszuführleitung und der daran angeschlossenen Versorgungsleitungen gewährleistet werden. Ausführungsgemäß kann die Bodenhalterung einzelne Halterungsabschnitte aufweisen, welche die Gaszuführleitung in ihrer Umfangsrichtung (im Querschnitt in radialer Richtung, bzw. in Querschnitt senkrecht zur Strömungsrichtung in der Gaszuführleitung) wenigstens teilweise umgeben. Die Halterungsabschnitte können dabei so ausgeführt sein, dass einzelne Gaszuführleitungen individuell in der Halterung befestigt bzw. gelöst werden können. Gemäß einer weiteren besonders bevorzugten Ausführungsform der Erfindung ist vorgesehen, dass die Stirnhalterung eine Federung aufweist, welche insbesondere die Änderung der Ausdehnung des Gehäuses bei Betrieb der Gasturbine kompensieren kann. Ebenso können damit auch mechanische Stöße und Schwingungseinwirkungen abgedämpft werden, so dass etwa eine verbesserte Erdbebensicherheit gewährleistet werden kann. Die Federung kann hierbei zu einer besonders effizienten Schwingungsdämpfung in Bezug auf die Federcharakteristik der Gaszuführleitung eingestellt sein. Insbesondere lassen sich Federn von bestimmter Federhärte dazu vorsehen, wobei eine statische oder auch eine schwingungsmechanisch dynamische Rechnung sicherstellen kann, dass die Eigenschwingungen des Systems besonders effizient gedämpft werden.

Entsprechend einer weiteren besonders bevorzugten Ausführungsform der Erfindung ist vorgesehen, dass die Stirnhalterung einen ersten Verbindungsbereich aufweist, welcher mit dem Gehäuse der Gasturbine fest verbunden ist, sowie einen zweiten Verbindungsbereich, welcher gegen das Gehäuse der Gasturbine abgestützt, jedoch mit diesem nicht fest verbunden ist. Insofern kann die Stirnhalterung auch Änderungen der Geometrie des Gehäuses der Gasturbine, etwa bei Betrieb der Gasturbine bei sehr hohen Temperaturen, kompensieren. Insbesondere ergeben sich keine Spannungen zwischen dem Gehäuse der Gasturbine und der Stirnhalterung, die zu Spannungsschäden, wie etwa Spannungsrissen führen können. Zudem kann so mitunter eine effiziente Dämpfung bei Einkopplung von Schwingungen in das System von Gasturbine und Gaszuführleitung erreicht werden, indem nämlich eine Bewegung der Stirnhalterung gegen das Gehäuse der Gasturbine ebenfalls zu einer Dämpfung der Schwingungsdämpfung beitragen kann. Insbesondere ist der zweite Verbindungsbereich der Stirnhalterung gegen die Oberflächte des Gehäuses der Gasturbine verschiebbar.

Entsprechend einer ebenfalls besonders bevorzugten Ausführungsform der Erfindung ist vorgesehen, dass die Halterung weiterhin wenigstens zwei Seitenhalterungen aufweist, welche jeweils auf einander gegenüberliegenden Seiten der Gasturbine die Gaszuführleitung abstützen, insbesondere lediglich gegen eine Bewegung in die Hauptströmungsrichtung abstützen. Bevorzugt erreichen die Seitenhalterungen hierbei eine Abstützung der Gaszuführleitung auf einer Höhe der Gasturbine, welche im Wesentlichen mittig zwischen der Stirnhalterung und der Bodenhalterung angeordnet ist. Die Seitenhalterungen dienen hierbei zur weiterhin verbesserten Abstützung der Gaszuführleitung insbesondere gegen eine Bewegung in die Hauptströmungsrichtung und senkrecht dazu. Durch die Seitenhalterungen können so zum einen wiederum Gewichtskräfte der Gaszuführleitung bzw. der daran angeschlossenen Versorgungsleitungen abgestützt werden, zudem kann aber auch eine Schwingungsdämpfung der Gaszuführleitung, insbesondere bei Bewegung in oder entgegen zur Hauptströmungsrichtung besonders effizient erreicht werden.

Entsprechend einer besonders bevorzugten Ausführungsform ist hierbei vorgesehen, dass die wenigstens zwei Seitenhalterungen nicht mit dem Gehäuse der Gasturbine verbunden sind und insbesondere gegen den Boden abgestützt sind, und bevorzugt in einem Fundament der Gasturbine verankert sind. Damit können die beiden Seitenhalterungen vergleichbar zur Bodenhalterung, zum einen von dem Gehäuse der Gasturbine entkoppelt werden, und damit eine besonders effiziente Dämpfung im Schwingungsfall erreichen, zum anderen brauchen keine technischen Vorkehrungen getroffen zu werden, wenn sich die Gasturbine etwa infolge der Temperaturschwankungen bei Betrieb thermisch ausdehnt bzw. zusammen zieht. Die feste Verankerung der beiden Seitenhalterungen im Fundament der Gasturbine gewährleistet hierbei zudem auch die Erdbebensicherheit bei Betrieb.

Entsprechend einer alternativen Ausführungsform bzw. ergänzenden Ausführungsform kann vorgesehen sein, dass die wenigstens zwei Seitenhalterungen Gaszuführleitungen nicht voll umfänglich umschließen, sondern insbesondere lediglich an zwei einander gegenüberliegenden Bereichen, die nicht miteinander verbunden sind, die Gaszuführleitung abstützen. Die beiden einander gegenüberliegenden Bereiche dienen hierbei insbesondere zu einer Abstützung bei einer Bewegung in Richtung der Hauptströmungsrichtung bzw. in entgegengesetzter Richtung. Hierdurch kann etwa eine gezielte richtungsorientierte Schwingungsdämpfung erfolgen, ohne etwa das Risiko eingehen zu müssen, die Gaszuführleitung aufgrund einer voll umfänglich umschließenden Halterung etwa im Erdbebenfall zu schädigen.

Gemäß einer ebenfalls bevorzugten Ausführungsform der Erfindung ist vorgesehen, dass mindestens zwei, wenigstens teilweise ringförmige Gaszuführleitungen, insbesondere genau zwei oder vier Gaszuführleitungen vorgesehen sind. Durch das Vorsehen einer Mehrzahl an Gaszuführleitungen kann somit die Flexibilität der Versorgung der Gasturbine mit Brennstoff verbessert werden. Ebenfalls wird dadurch die Wartungsfähigkeit verbessert, da einzelne Gaszuführleitungen individuell gewartet, entnommen bzw. ausgetauscht werden können. Aufgrund der Erfahrung der Anmelderin hat es sich als vorteilhaft erwiesen, zwei oder vier Gaszuführleitungen vorzusehen, da diese mitunter Brennstoff bei unterschiedlichen Drücken, die zu unterschiedlichen Betriebszeitpunkten zur Verfügung gestellt werden können, vorhalten können.

Gemäß einer weiteren Ausführungsform der Erfindung ist vorgesehen, dass die wenigstens eine Gaszuführleitung und die Halterung in einem Bereich des Gehäuses der Gasturbine vorgesehen sind, welcher keine Leitschaufelverstelleinrichtung aufweist. Somit kann gewährleistet werden, dass die Gaszuführleitung bzw. Halterung und die Leitschaufelverstelleinrichtung sich nicht gegenseitig unerwünscht beeinflussen. Ein Vorsehen von Gaszuführleitung und Halterung betrifft hierbei das geometrische Anordnen von Gaszuführleitung und Halterung am Gehäuse der Gasturbine, bzw. oberhalb der Oberfläche des Gehäuses. Ausführungsgemäß ist es also denkbar, dass das Gehäuse der Gasturbine eine Leitschaufelverstelleinrichtung aufweist auf einer maximalen Höhe über dem Gehäuse angeordnet ist, bzw. aus diesem heraus ragt, die die wenigstens eine Gaszuführleitung jedoch noch über dieser maximalen Höhe von der Halterung fixiert ist.

Nachfolgend soll die Erfindung anhand einzelner Figuren im Detail näher erläutert werden. Hierbei ist anzuführen, dass die Figuren lediglich schematisch zu verstehen sind und keine Einschränkung hinsichtlich der Ausführbarkeit der Erfindung erlauben.

Weiterhin ist darauf hinzuweisen, dass alle Bauteile mit gleichen Bezugszeichen eine vergleichbare technische Wirkung aufweisen.

Ebenso soll darauf hingewiesen werden, dass die nachfolgend dargestellten technischen Merkmale in beliebiger Kombination miteinander beansprucht werden sollen, soweit die Kombination die der Erfindung zugrundeliegende Aufgabe zu lösen im Stande ist.

Hierbei zeigen:
- Figur 1: eine perspektivische Seitenansicht einer Ausführungsform der erfindungsgemäßen stationären Gasturbine 1 mit Halterung 10;
- Figur 2: eine perspektivische Detailansicht einer Ausführungsform der Stirnhalterung 12;
- Figur 3: eine Schnittansicht durch eine Ausführungsform der in Figur 1 gezeigten Stirnhalterung 12;

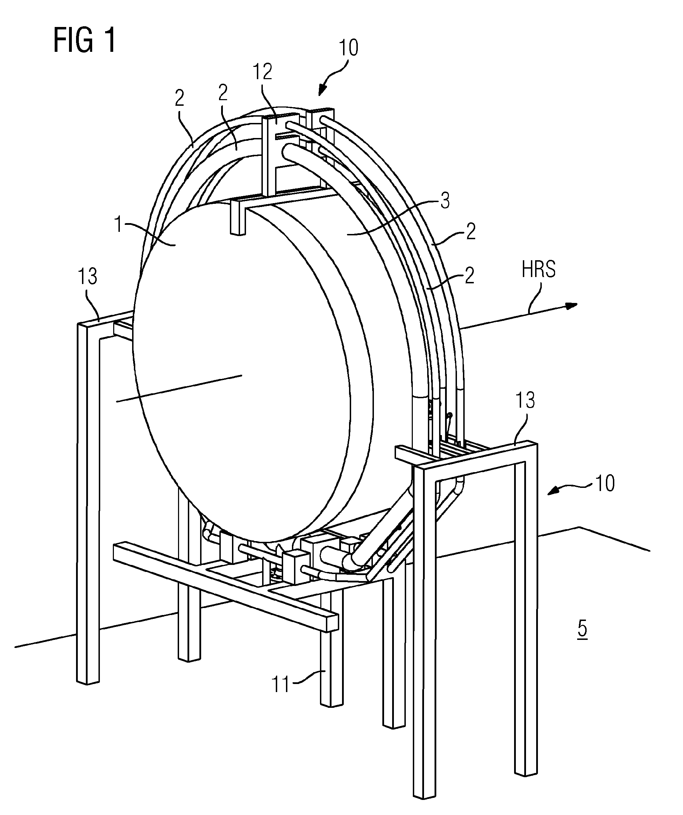

Figur 1 zeigt eine perspektivische Ansicht von der Seite auf eine Ausführungsform der erfindungsgemäßen stationären Gasturbine 1, welche eine Halterung 10 aufweist, die zur Halterung einer wenigstens teilweise ringförmigen Gaszuführleitung 2 vorgesehen ist. Die Gaszuführleitung 2 weist insgesamt vier Einzelleitungen auf, die im Wesentlichen ringförmig die äußere Fläche des Gehäuses 3 in Umfangsrichtung umlaufen bzw. umgeben.

Die einzelnen Leitungen der Gaszuführleitung 2 werden hierbei durch eine Bodenhalterung 11, eine Stirnhalterung 12 sowie zwei Seitenhalterungen 13 gehaltert bzw. abgestützt.

Die Stirnhalterung 12 ist bei regulärem Betrieb der Gasturbine 1, wie vorliegend dargestellt auf dem Scheitelpunkt der Außenfläche des Gehäuses 3 angebracht. Die Stirnhalterung 12 weist hierbei einzelne Halterungsabschnitte für die Einzelleitungen der Gaszuführleitung 2 auf, welche sowohl das Eigengewicht dieser Einzelleitungen senkrecht zu einer Hauptströmungsrichtung HSR der Gasturbine 1 abstützen, als auch senkrecht dazu also in Richtung der Hauptströmungsrichtung HSR bzw. in dazu entgegengesetzter Richtung. Die Hauptströmungsrichtung HSR betrifft hierbei diejenige Richtung der Arbeitsfluide in der Gasturbine 1, welche bei regulärem Betrieb, sich in Mittel über die gesamte Geometrie der Gasturbine 1 ergibt. Im Normalfall entspricht diese Hauptströmungsrichtung HSR der Längserstreckungsrichtung des Gasturbinenläufers (vorliegend nicht gezeigt), wie auch vorliegend zutreffend.

Die Bodenhalterung 11 ist auf einer der Stirnhalterung 12 gegenüberliegenden Seite der Gasturbine 1 angeordnet. Da die Bodenhalterung 11 mit dem Gehäuse der Gasturbine 1 mechanisch nicht direkt verbunden ist, ist sie besonders gut von dieser gegen Schwingungen entkoppelt. Eine Verbindung zwischen Bodenhalterung 11 und Gasturbine 1 erfolgt lediglich vermittelt über die Einzelleitungen der Gaszuführleitung 2. Die Bodenhalterung 11 vermag eine Abstützung des Eigengewichts der Einzelleitungen der Gaszuführleitung 2 zum Boden hin zu bewirken, sowie auch eine Abstützung in Bezug auf eine Bewegung in Richtung der Hauptströmungsrichtung HSR bzw. in entgegengesetzter Richtung. Um dennoch eine sichere Positionierung der Bodenhalterung 11 in Bezug auf die Gasturbine 1 gewährleisten zu können, ist die Bodenhalterung 11 in einem Fundament 5 verankert, in welchem die Gasturbine 1 ebenfalls verankert ist (vorliegend nicht gezeigt). Die Bodenhalterung 11 weist wie die Stirnhalterung 12 einzelne Halterungsabschnitte für die Einzelleitungen der Gaszuführleitung 2 auf, welche eine voll umfängliche Umfassung dieser Einzelleitungen vorsieht. Dadurch kann eine sichere Halterung sowie eine gute Abstützung in weitere Raumrichtungen erreicht werden.

Die wesentlichen Vorteile der Bodenhalterung 11 sind in der Aufnahme und Abstützung des Eigengewichts der Einzelleitungen der Gaszuführleitung 2 zu erkennen, sowie in der damit verbundenen Aufnahme in Abstützung von Anschlusslasten der Versorgungsleitungen (vorliegend nicht gezeigt). Gleichzeitig können Einzelleitungen der Gaszuführleitung 2 durch geeignete Halterungsabschnitte fixiert werden, so dass keine Bewegung senkrecht zur der Hauptströmungsrichtung HSR erfolgen kann. Zudem weist die Bodenhalterung 11 eine feste Verankerung im Fundament 5 auf, wodurch eine Fixierung in Bezug auf die ebenfalls in dem Fundament 5 fixierte Gasturbine 1 erreicht werden kann.

Die Halterung 10 weist zudem zwei Seitenhalterungen 13 auf, die wie die Bodenhalterung 11, in Ständerform ausgebildet sind. Die Seitenhalterungen 13 sind hierbei mit Halterungsabschnitten versehen, welche die Einzelleitungen der Gaszuführleitung 2 auf einer Höhe abstützen, welche etwa mittig zwischen der Anbringungshöhe der Stirnhalterung 12 und derjenigen der Bodenhalterung 11 vorgesehen ist. Hierbei können die Halterungsabschnitte, die einzelnen Leitungen der Gaszuführleitung 2 wiederum vollumfänglich umschließen, um so eine Bewegungseinschränkung der Einzelleitungen in zwei Raumrichtungen erreichen zu können. Es ist jedoch aber auch möglich, dass die Halterungsabschnitte lediglich eine Abstützung in zwei einander gegenüberliegenden Bereichen ermöglicht, die insbesondere nur eine Bewegung der Einzelleitungen der Gaszuführleitungen in die Hauptströmungsrichtung HSR und in die entgegengesetzte Richtung verhindern können, also gegen diese Bewegungen eine Abstützung erreichen.

Die beiden Seitenhalterungen 13 erlauben also eine zusätzlich Bereitstellung von Abstützungsbereichen, die insbesondere eine richtungsabhängige Führung und damit Gewährleistung von zusätzlicher Stabilität erreichen. Aufgrund der konkreten Ausführungsform der beiden Seitenhalterungen 13 kann die Wärmeausdehnung der Gaszuführleitung 2 bei Betrieb der Gasturbine erfolgen, ohne schädigende Bauteilspannungen hervorzurufen.

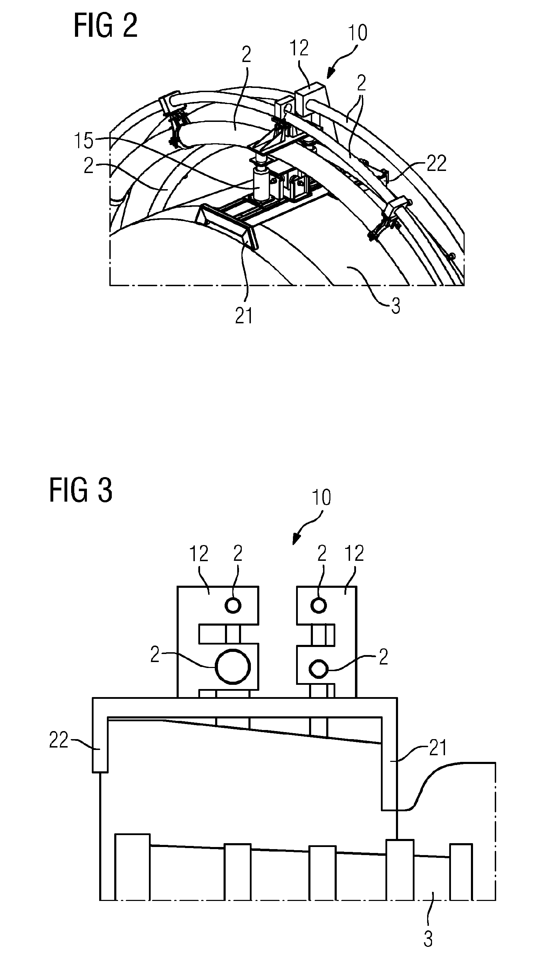

Figur 2 zeigt eine perspektivische Detailansicht einer weiteren Ausführungsform einer Stirnhalterung 12, in welcher deutlich zu erkennen ist, dass die Einzelleitungen der Gaszuführleitung 2 jeweils gesondert gehaltert werden. Die Stirnhalterung 12 weist zudem eine Federung 15 auf, welche insbesondere die Änderung der Ausdehnung des Gehäuses 3 bei Betrieb der Gasturbine 1 kompensieren kann. Zudem ist ein erster Verbindungsbereich 21 vorgesehen, welcher mit dem Gehäuse 3 der Gasturbine 1 fest verbunden ist, sowie ein zweiter Verbindungsbereich 22, welcher gegen das Gehäuse 3 der Gasturbine abgestützt ist, jedoch mit diesem nicht fest verbunden ist. Somit kann eine Spannungsschädigung bei Temperaturänderungen vermieden werden, da die Stirnhalterung 12 lediglich an einem Verbindungsbereich mit dem Gehäuse 3 der Gasturbine 1 fest verbunden ist, der andere aber eine Verschiebung der Bauteile gegeneinander erlaubt.

Der Vorteil der Stirnhalterung 12 liegt in erster Linie in einer Gewährleistung der sicheren Halterung auch bei Eintritt eines Erdbebens. Zudem ermöglicht die Stirnhalterung 12 die Abstützung der Gaszuführleitung 2 in Richtung des Bodens zur Aufnahme des Eigengewichts wie auch in Bewegungsrichtung senkrecht dazu, etwa in Hauptströmungsrichtung HSR. Ist die Stirnhalterung 12, wie gezeigt, modular aufgebaut, können einzelne Leitungen der Gaszuführleitung 2 leicht entnommen und ersetzt werden. Aufgrund der Ausführungen der Stirnhalterung mittels Federung 15 sowie durch lediglich fester Verbindung mit dem Gehäuse über den ersten Verbindungsbereich 21 kann ein Ausgleich der Wärmeausdehnung bei Betrieb der Gasturbine 1 effizient erreicht werden.

Ausführungsgemäß ist es auch möglich, die Stirnhalterung 12 als Schlitten (vorliegend nicht gezeigt) auszuführen, so dass ein Schlittenläufer, welcher die Einzelleitungen der Gaszuführleitung 2 haltert, und in einer Vorzugsrichtung auf einem solchen Schlitten, insbesondere in Richtung der Hauptströmungsrichtung HSR bzw. senkrecht dazu, verfahren werden kann.

Figur 3 zeigt eine Querschnittansicht durch eine Ausführungsform der Stirnhalterung 12, wie sie bspw. in Figur 1 gezeigt ist. Hierbei ist insbesondere deutlich zu sehen, dass die Stirnhalterung 12 auf einer Höhe angeordnet ist, welche über der maximalen Höhe einer Leitschaufelverstelleinrichtung angeordnet ist. Insofern ist gewährleistet, dass eine Halterung der Gaszuführleitung 2 auch dann noch sicher und vorteilhaft erreicht werden kann, wenn die Halterung 10 auf einem Abschnitt des Gehäuses der Gasturbine 1 vorgesehen ist, welcher auch eine Leitschaufelverstelleinrichtung aufweist.

Weitere Ausführungsformen ergeben sich aus den Unteransprüchen.

## Patentansprüche

1. Stationäre Gasturbine (1) mit mindestens einer wenigstens teilweise ringförmigen Gaszuführleitung (2), die durch eine Halterung (10) abgestützt ist, wobei die Gasturbine (1) im Inneren eine Hauptströmungsrichtung (HSR) der Arbeitsfluide aufweist, und wobei die Halterung (10) wenigstens eine gegen den Boden abgestützte Bodenhalterung (11) und eine auf dem Gehäuse (3) der Gasturbine (1), auf der der Bodenhalterung (11) gegenüber liegenden Seite angebrachte Stirnhalterung (12) umfasst, und wobei sowohl die Bodenhalterung (11) als auch die Stirnhalterung (12) die Gaszuführleitung (2) sowohl gegen eine Bewegung in die Hauptströmungsrichtung (HSR) als auch senkrecht dazu abstützen.

2. Gasturbine nach Anspruch 1,
**dadurch gekennzeichnet, dass** die Bodenhalterung (11) nicht mit dem Gehäuse der Gasturbine (1) verbunden ist und insbesondere in einem Fundament (5) der Gasturbine (1) verankert ist.

3. Gasturbine nach einem der vorhergehenden Ansprüche,
**dadurch gekennzeichnet, dass** die Stirnhalterung (12) eine Federung (15) aufweist, welche insbesondere die Änderung der Ausdehnung des Gehäuses (3) bei Betrieb der Gasturbine (1) kompensiert.

4. Gasturbine nach einem der vorhergehenden Ansprüche,
**dadurch gekennzeichnet, dass** die Stirnhalterung (12) einen ersten Verbindungsbereich (21) aufweist, welcher mit dem Gehäuse (3) der Gasturbine (1) fest verbunden ist, sowie einen zweiten Verbindungsbereich (22), welcher gegen das Gehäuse (3) der Gasturbine (1) abgestützt, jedoch mit diesem nicht fest verbunden ist.

5. Gasturbine nach einem der vorhergehenden Ansprüche,
**dadurch gekennzeichnet, dass** die Halterung (10) weiterhin wenigstens zwei Seitenhalterungen (13) aufweist, welche jeweils auf einander gegenüber liegenden Seiten der Gasturbine (1) die Gaszuführleitung (2) abstützen, insbesondere lediglich gegen eine Bewegung in die Hauptströmungsrichtung (HSR) abstützen.

6. Gasturbine nach Anspruch 5,
**dadurch gekennzeichnet, dass** die wenigstens zwei Seitenhalterungen (13) nicht mit dem Gehäuse der Gasturbine (1) verbunden sind und insbesondere gegen den Boden abgestützt sind, und bevorzugt in einem Fundament (5) der Gasturbine (1) verankert sind.

7. Gasturbine nach Anspruch 5 oder 6,
**dadurch gekennzeichnet, dass** die wenigstens zwei Seitenhalterungen (13) die Gaszuführleitung (2) nicht vollumfänglich umschließen, sondern insbesondere lediglich an zwei einander gegenüber liegenden Bereichen, die nicht miteinander verbunden sind, die Gaszuführleitung (2) abstützen.

8. Gasturbine nach einem der vorhergehenden Ansprüche,
**dadurch gekennzeichnet, dass** mindestens zwei wenigstens teilweise ringförmige Gaszuführleitungen (2), insbesondere genau zwei oder vier Gaszuführleitungen (2) vorgesehen sind.

9. Gasturbine nach einem der vorhergehenden Ansprüche,
**dadurch gekennzeichnet, dass** die wenigstens eine Gaszuführleitung (2) und die Halterung (10) in einem Bereich des Gehäuses (3) der Gasturbine (1) vorgesehen sind, welcher keine Leitschaufelverstelleinrichtung aufweist.
